# EUROPEAN PATENT APPLICATION

(11) **EP 0 702 037 A1**
(43) Date of publication of application: **20.03.1996**
(21) Application number: 95304177.9
(22) Date of filing: 16.06.1995
(51) Int. Cl.: C08F 290/04, C02F 1/54

(54) **Water soluble graft copolymers for deinking process water clarification**

(30) Priority: 16.09.1994 US 307963; 10.01.1995 US 370930
(71) Applicant: BETZ EUROPE, INC., Trevose, PA 19053-6783 (US)
(72) Inventor: Harrington, John C., Jacksonville, FL 32217 (US); Schuster, Michael A., Jacksonville, FL 32217 (US); Liao, Wen P., Warminster, PA 18974 (US); Chen, Fu, Newtown, PA 18940 (US)
(74) Representative: W.P. Thompson & Co.

(57) **Abstract**

A method for clarifying deinking process water in a papermaking process by using a water soluble graft copolymer having the structure: 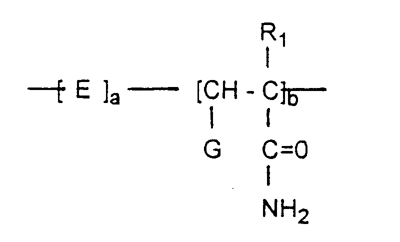
wherein E is the repeat unit obtained after polymerization of an α, β ethylenically unsaturated compound, the molar percentage of a:b is from about 95:5 to 5:95, with the proviso that the sum of a and b equals 100%; G comprises the structure: 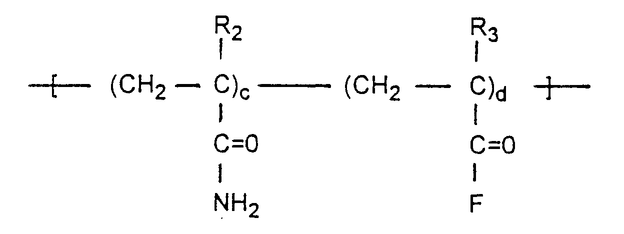
wherein 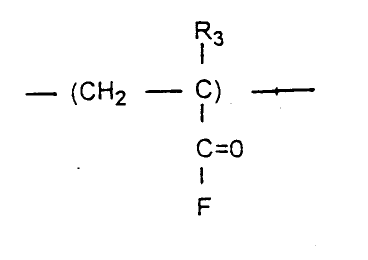
is the repeating unit of a cationic monomer, and maybe the same or different througout.
R₁, R₂ and R₃ are the same or different
and are hydrogen or a lower alkyl group having C₁ to C₃. F is a salt of an ammonium cation and the molar percentage of c:d is from 95:5 to 5:95 with the proviso that the sum of c and d equals 100%.

## Description

### FIELD OF THE INVENTION

The present invention pertains to novel water soluble graft copolymers which are useful for water treatment, such as sludge dewatering and water clarification. More particularly, it relates to the use of a novel graft copolymer for the clarification of deinking process water of a papermaking process.

### BACKGROUND OF THE INVENTION

There is an increasing usage of water soluble polymers and copolymers in wastewater treatment industries. These compounds have shown desirable utility for the purpose of dewatering sludge and clarifying contaminated water.

The efficacies of the polymers or copolymers used will vary depending upon the type of monomers chosen to form the polymer or copolymer, the molecular weight of the synthesized molecule and, in the case of a copolymer, the placement of the selected monomers on the backbone of the copolymer. It is the latter characteristic that is the focus of the present invention.

Polymers with long sequences of two monomers can be categorized as block copolymers or graft copolymers. In graft copolymers sequences of one monomer are "grafted" onto a "backbone" of the second monomer type, 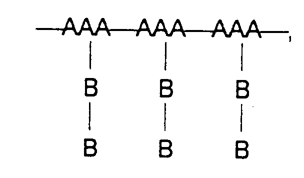
etc.

Graft copolymers have unique and highly desirable properties as compared to random copolymers or the blend of two homopolymers. Therefore, there is a great interest in preparing them. Few techniques described in the literature satisfy the need.

Furthermore, with ever increasing usages of water soluble polymers and copolymers in industries such as wastewater treatment, cooling, boiler and deposit control, coating, textile, mining, detergency, cosmetics, and papermaking, etc., there is an urgent need to synthesize novel water soluble graft copolymers for this broad range of applications.

Clarification chemicals are typically utilized in conjunction with mechanical clarifiers for the removal of solids from the effluent. Clarification generally refers to the removal of material by coagulation, and/or flocculation, then sedimentation or flotation. See the Betz Handbook of Industrial Water Conditioning, 9th Edition, 1991, Betz Laboratories, Inc., Trevose, PA pages 23 through 30.

Conventional polyacrylamide copolymers have been used in this application. However, there still exists a need to provide a novel polymer in a more effective and economic treatment process. This objective is achieved by the present invention. The novel graft copolymers exhibit the desired efficacy for deinking process water clarification applications.

### BRIEF DESCRIPTION OF THE DRAWINGS

Figure 1 is a graph demonstrating water clarification (supernatant NTU) of deinking process water generated from nonimpact print fiber versus polymer dosage for the inventive graft copolymers and comparative linear Polymer 1.

Figure 2 is a graph demonstrating water clarification (supernatant NTU) of deinking process water generated from old newsprint versus polymer dosage for the inventive graft copolymers and comparative linear polymer 1.

### DETAILED DESCRIPTION OF THE INVENTION

The present invention relates to the use of novel water soluble graft copolymers in clarifiers for deinking process water.

Specifically, the graft copolymers in the invention contain polymeric segments obtained from the polymerization of acrylamide and cationic monomers which are attached or "grafted" to another polymer chain which is comprised of the repeating units of one or more monomers. The resulting graft copolymers are soluble in an aqueous medium.

The graft copolymer of the invention has the general structure:

### Formula I

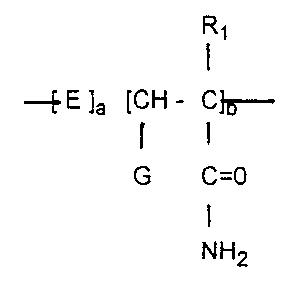

wherein E in the above formula (Formula I) is the repeat unit obtained after polymerization of an α, β ethylenically unsaturated compound, preferably carboxylic acid, amide form thereof, alkyl (C1-C8) ester or hydroxylated alkyl (C1-C8) ester of such carboxylic acid. Compounds encompassed by E include the repeat unit obtained after polymerization of acrylamide, methacrylamide, acrylic acid, methacrylic acid, maleic acid or anhydride, styrene sulfonic acid, 2-acrylamido-2-methylpropyl sulfonic acid, itaconic acid, and the like. Ester derivatives of the above mentioned acids such as 2-hydroxypropyl acrylate, methyl methacrylate, and 2-ethylhexyl acrylate, are also within the purview of the invention.

The molar percentage of a:b is from about 95:5 to 5:95, with the proviso that the sum of a and b equals 100%.

G in the above formula (Formula I) is a polymeric segment comprising repeat units having the structure:

### Formula II

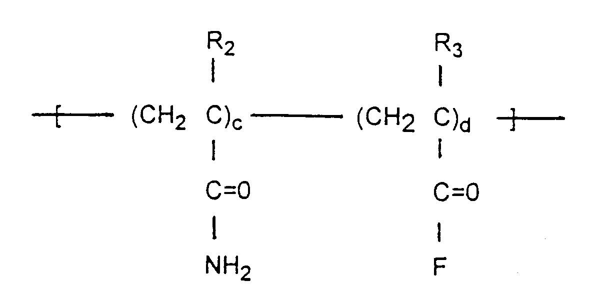

wherein R₁, R₂ and R₃ in Formulae I and II are the same or different and are hydrogen or a lower alkyl group having C₁ to C₃. F in the above formula is a salt of an ammonium cation, such as NHR₃N⁺R(_{4,5,6})M⁻ or OR₃N⁺R(_{4,5,6})M⁻, wherein R₃ is a C₁ to C₄ linear or branched alkylene group, and R₄, R₅ and R₆ can be selected from the group consisting of hydrogen, C₁ to C₄ linear or branched alkyl, C₅ to C₈ cycloalkyl, aromatic or alkylaromatic group; and M is an anion, such as chloride, bromide, or methyl or hydrogen sulfate. 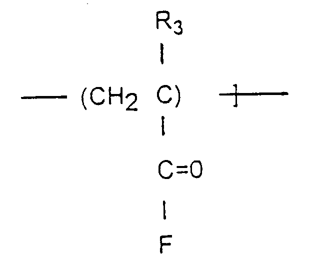
is the repeating unit of a cationic monomer, and maybe the same or different througout.

Typical cationic monomers are 2-acryloyloxyethyltrimethylammonium chloride (AETAC), 3-(meth)acrylamidopropyltrimethylammonium chloride (MAPTAC or APTAC), 2-methacryloyloxyethyltrimethylammonium chloride (METAC) and diallyldimethylammonium chloride (DADMAC), etc.

It is understood that more than one kind of cationic monomer may be present in Formula II.

The molar percentage c:d in Formula II may vary from 95:5 to 5:95, with the proviso, however, the sum of c and d equals 100%.

There is no limit to the kind and mole percent of the monomers chosen so long as the total adds up to 100 mole % and the resulting copolymers are water soluble.

At present, the preferred water soluble graft copolymer for use as a deinking process water clarifier is:

### Formula III

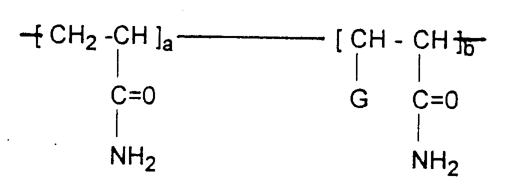

The molar percentage of a:b is from about 95:5 to 5:95, with the proviso that the sum of a and b equals 100%. G in Formula III is:

### Formula IV

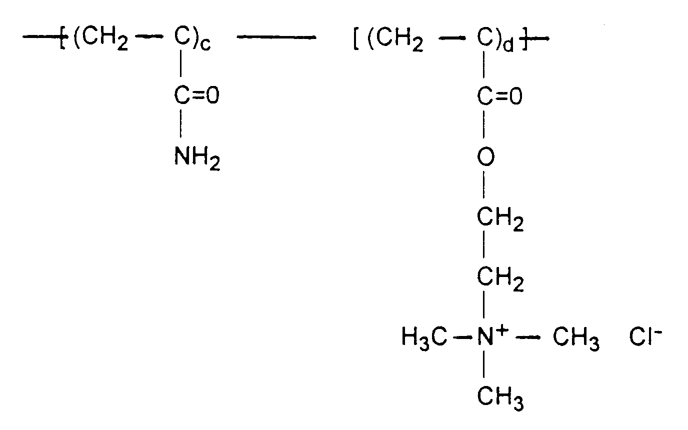

The cationic monomer is 2-acryloyloxyethyltrimethylammonium chloride (AETAC). The molar percentage c:d in the polymer segment G (Formula IV) is the ratio of acrylamide:AETAC. It may fall within the range between 95:5 and 5:95. The sum of c and d must add up to 100%.

The number average molecular weight (Mₙ) of the polymeric segment G is not critical and may fall within the range of 1,000 to 1,000,000. Preferably, the number average molecular weight will be within the range of 5,000 to 500,000, with the range of about 10,000 to about 200,000 being even more desirable. The key criterion is that the resulting graft copolymer be water soluble.

The graft copolymer is prepared via a two-step polymerization process. First, a macromonomer comprised of acrylamide and AETAC is prepared by a water-in-oil inverse emulsion polymerization method using peroxide as an initiator. Such processes have been disclosed in U.S. Patents 3,284,393, Reissue 28,474 and Reissue 28,576, herein incorporated by reference. The initiator may be selected from peroxides, persulfates, bromates, and azo-type initiators such as 2,2'-azobis-(2-amidinopropane) dihydrochloride, 2,2'-azobis-(2,4-dimethylvaleronitrile). Copper (II) sulfate is added in the process as an oxidative chain transfer agent to generate a terminal unsaturated double bond in the polymer chain. It is conceivable that transition metal ions other than copper, such as iron, cobalt, and nickel etc., may be used in the invention.

Ethylenediaminetetraacetic acid or diethylenetriamine pentaacetic acid and their salts or their amino analogue are used as chelating agents to chelate or to form complexes with copper prior to the second polymerization step.

The resulting macromonomer is then copolymerized with acrylamide or other monomers to form graft copolymers by a similar water-in-oil inverse emulsion technique.

Branching agents such as polyethyleneglycol di(meth)acrylate, N,N'-methylenebis(meth)acrylamide, N-vinyl acrylamide, allyl glycidyl ether, glycidyl acrylate and the like may also be added, providing the resulting graft copolymer is water soluble. Any of the well known chain transfer agents familiar to those who are skilled in the art may be used to control the molecular weight. Those include, but are not limited to, lower alkyl alcohols such as isopropanol, amines, mercaptans, phosphites, thioacids, formate, allyl alcohol and the like.

Conventional initiators such as peroxide, persulfate, along with sulfite/bisulfite and azo compounds may be used depend on the system chosen.

High HLB inverting surfactants such as those described in U.S. Patent Re. 28,474 are then added to the emulsion to convert the resulting emulsion to a "self-inverting" emulsion. Using the procedure described herein, a unique graft copolymer in emulsion form is obtained.

The resulting copolymer may also be further isolated by precipitating it in an organic solvent such as acetone and dried to a powder form. The powder can be easily dissolved in an aqueous medium for use in the desired applications.

It is to be understood that the aforementioned polymerization methods do not in any way limit the synthesis of copolymers according to this invention.

The resulting emulsion disperses and dissolves rapidly into an aqueous solution upon addition to water under moderate shear conditions. Within minutes, a maximum solution viscosity is obtained. The emulsion dissolves well even in water containing a high level of hardness and it also retains most of its solution viscosity in brine water.

The structure of the graft copolymer is substantiated by a conventional solution viscosity study and C¹³ NMR spectroscopy. The molecular weight of the resulting graft copolymer is not critical, as long as the polymer is soluble in water. The molecular weight may vary over a wide range, e.g., 10,000 - 30,000,000 and may be selected depending upon the desired application.

The graft copolymer is added to the clarifier influent water flow. It is added in an amount of from about 0.5 to 100 ppm of active polymer per total influent volume. Preferably 0.5 to 50 ppm of active polymer per total influent volume is used.

### Performance Test

### Example 1

In the following test, the performance of the water soluble graft copolymers described in this invention is demonstrated in laboratory tests. Deinking process water from a Midwest paper mill was obtained for the substrate. This process water comprises 100% mixed office waste non-impact print fiber and has the following properties: pH, 6.5-7.0; solids content of 0.08%; and a total turbidity of 890 NTU.

### Test Procedure - DAF Clarification

1. 250 milliliters (ml) of stock at 25°C is measured in a graduated cylinder and poured into a 400 ml glass beaker. The beaker contains a Teflon coated magnetic stirring bar, and is centered on a magnetic stirring plate. The stir plates have been previously calibrated to provide approximately equivalent shear mixing speeds at "high" and "low" speeds.
2. The beakers are turned on to high speed; once the samples have equilibrated, the test level of coagulant is introduced into the center of the vortex with a previously filled syringe. The polymer is allowed to mix for a predetermined time consistent with the individual mill's clarifier design, typically 10 to 60 seconds.
3. After the polymer mix time, the speed of the mixer is reduced to "low" speed for a time period consistent with the actual clarifier, typically 30 to 60 seconds. After the low speed mixing time is completed, the mixers are turned off, and the flocculated particles are allowed to settle. The settling volumes and times are recorded.
4. Supernatant is then removed from the beaker, and the turbidity is recorded on a turbidimeter for each polymer and polymer dosage level.

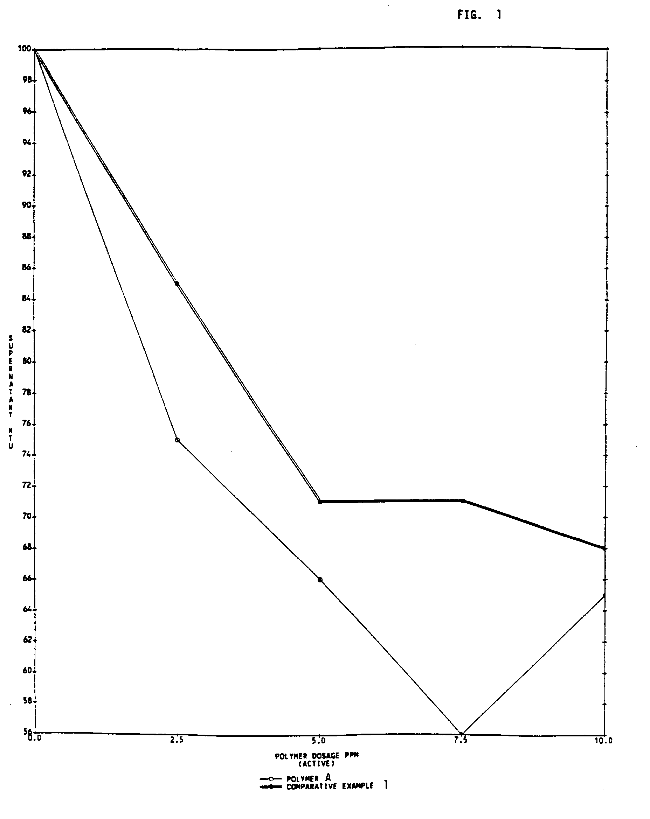

The results are shown in Table I and Figure 1. Polymer A is a water soluble graft copolymer of 80:20 acrylamide:AETAC prepared according to the described procedure. Comparative polymer 1 is a conventional linear polymer with a 80:20 molar ratio of acrylamide:AETAC.

**TABLE I**

| **Nonimpact Print Fiber Furnish - DAF Clarifier Influent** | | |
|---|---|---|
| Polymer | Dosage (ppm active) | NTU |
| Blank A | 0 | 100 |
| | 2.5 | 75 |
| | 5 | 66 |
| | 7.5 | 56 |
| | 10 | 65 |
| Comparative Example 1 | 2.5 | 85 |
| | 5 | 71 |
| | 7.5 | 71 |
| | 10 | 68 |

The data presented in Table I and graphically represented in Figure 1 demonstrate the improved clarification efficacy for deinking process waters of the water soluble graft copolymers over the linear, non-grafted water soluble polymers.

### Example 2

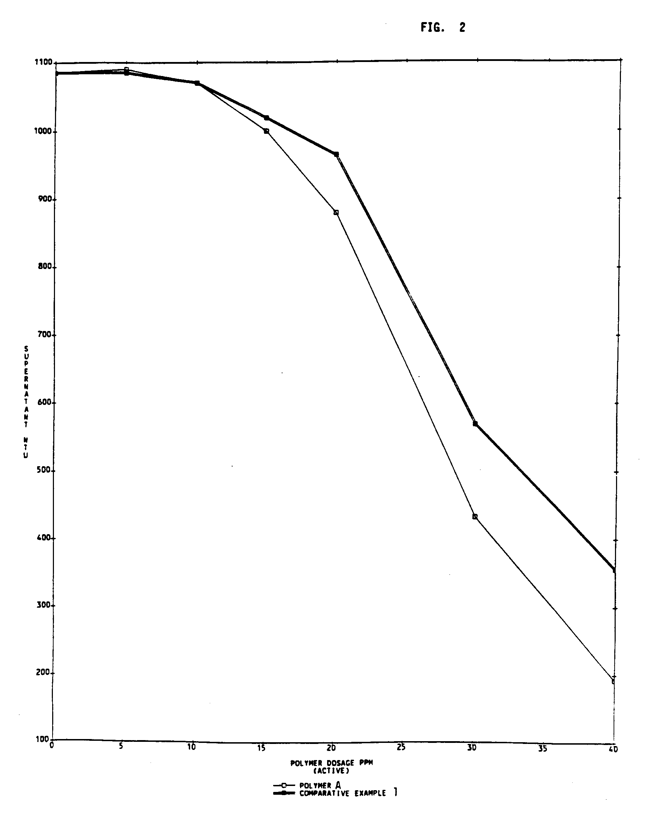

In this test, clarifier influent from a Southeastern deinking source was obtained for the substrate. This process water contained 100% ONP (old newsprint) for its fiber source, which can also contain 10 to 20% glossy inserts. This process water exhibits a consistency of 0.25 to 0.30%, a pH of 8.5 to 9.5, and a total turbidity of 370 NTU. The test procedure was that followed in Example 1. Results are shown in Table II and Figure 2.

**TABLE II**

| **ONP Furnish - DAF Clarifier Influent** | | |
|---|---|---|
| Polymer | Dosage (ppm active) | NTU |
| Blank A | 0 | 1085 |
| | 5 | 1090 |
| | 10 | 1070 |
| | 15 | 1000 |
| | 20 | 880 |
| | 30 | 433 |
| | 40 | 192 |
| Comparative Example 1 | 5 | 1085 |
| | 10 | 1070 |
| | 15 | 1020 |
| | 20 | 965 |
| | 30 | 569 |
| | 40 | 356 |

The data presented in Table II and graphically represented in Figure 2 demonstrate the improved clarification efficacy for ONP deinking process waters of the water soluble graft copolymers over the linear, non-grafted water soluble polymers.

While this invention has been described with respect to particular embodiments thereof, it is apparent that numerous other forms and modifications of this invention will be obvious to those skilled in the art. The appended claims and this invention generally should be construed to cover all such obvious forms and modifications which are within the true spirit and scope of the present invention.

## Claims

1. A method for clarifying deinking process water in a papermaking process comprising adding to said process water a sufficient amount for the purpose of a water soluble graft copolymer having the structure: 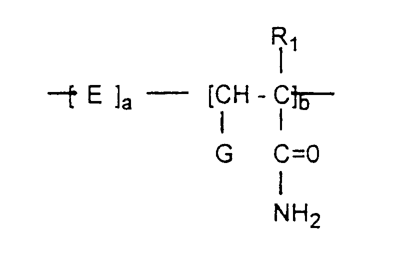 wherein E is the repeat unit obtained after polymerization of an α, β ethylenically unsaturated compound, the molar percentage of a:b is from about 95:5 to 5:95, with the proviso that the sum of a and b equals 100%; G comprises the structure: 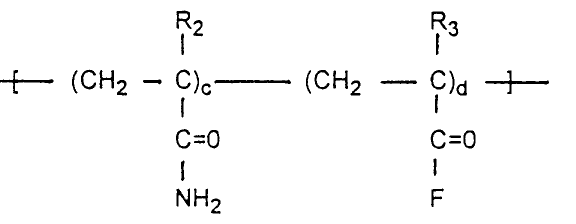 wherein 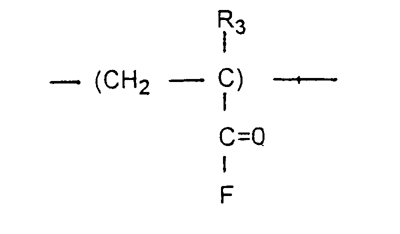 is the repeating unit of a cationic monomer, and maybe the same or different througout.
R_{1,} R₂ and R₃ are the same or different
and are hydrogen or a lower alkyl group having C₁ to C₃, F is a salt of an ammonium cation and the molar percentage of c:d is from 95:5 to 5:95 with the proviso that the sum of c and d equals 100%.

2. A method as claimed in claim 1, wherein the α, β ethylenically unsaturated compound is selected from the group consisting of a carboxylic acid, the amide form thereof, the alkyl (C₁-C₈) ester thereof and the hydroxylated alkyl (C₁-C₈) thereof.

3. A method as claimed in claim 1 or 2, wherein the α, β ethylenically unsaturated compound is selected from the group consisting of acrylamide, methacrylamide, acrylic acid, methacrylic acid, maleic acid, maleic anhydride, styrene sulfonic acid, 2-acrylamido-2-methyl propyl sulfonic acid, itaconic acid, 2-hydroxylpropyl acrylate, methyl methacrylate and 2-ethylhexyl acrylate.

4. A method as claimed in any one of the preceding claims wherein F is selected from the group consisting of NHR₃N+R(_{4,5,6})M-or OR₃N+R(_{4,5,6)}M-, wherein R₃ is a C₁ to C₄ linear or branched alkylene group, and R₄, R₅ and R₆ are selected from the group consisting of hydrogen, C₁ to C₄ linear or branched alkyl, C₅ to C₈ cycloalkyl, aromatic or alkylaromatic group; and M⁻ is an anion selected from the group consisting of chloride, bromide, methyl sulfate and hydrogen sulfate.

5. A method as claimed in any one of the preceding claims, wherein the cationic monomer is selected from the group consisting of 2-acryloyloxyethyltrimethylammonium chloride, 3-(meth)acrylamidopropyltrimethylammonium chloride, 2-methacryloyloxyethyltrimethylammonium chloride and diallyldimethylammonium chloride.

6. A method as claimed in any one of the preceding claims, wherein the water soluble graft copolymer has the structure: 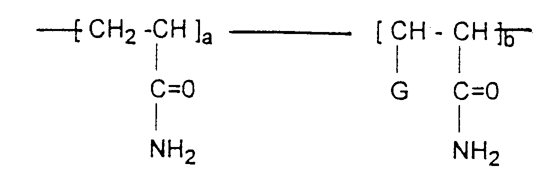 wherein the molar percentage of a:b is from about 95:5 to 5:95, with the proviso that the sum of a and b equals 100%, and G has the structure:

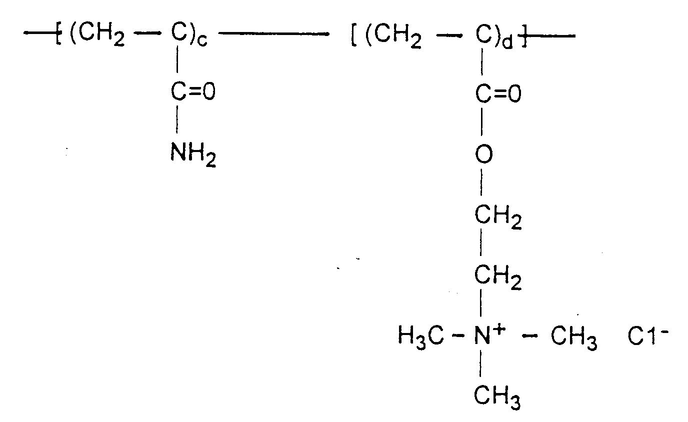

7. A method as claimed in any one of the preceding claims, wherein the number average molecular weight of G is from about 1,000 to 1,000,000.

8. A method as claimed in claim 7, wherein the number average molecular weight of G is from about 5,000 to 500,000.

9. A method as claimed in 8, wherein the number average molecular weight of G is from about 10,000 to 200,000.

10. A method as claimed in any one of the preceding claims, wherein the graft copolymer has a number average molecular weight of from about 10,000 to 30,000,000.

11. A method as claimed in claim 10, wherein the graft copolymer has a number average molecular weight of from about 1,000,000 to 30,000,000.

12. A method as claimed in any one of the preceding claims, wherein the graft copolymer is added to the clarifier influent in an amount of from about 0.5 to 100ppm active polymer per total influent volume.

13. A method as claimed in any one of the preceding claims wherein the amount is from about 0.5 to 50 ppm active copolymer per total influent volume.

14. A method as claimed in any one of the preceding claims, wherein the graft copolymer is added to the influent flow prior to the clarifier.
